# EUROPEAN PATENT APPLICATION

(11) **EP 4 838 643 A2**
(43) Date of publication of application: **11.11.2026**
(21) Application number: 26208767.9
(22) Date of filing: 30.09.2026
(51) Int. Cl.: H01M 50/105, H01M 50/178, H01M 50/184, H01M 50/186

(54) **SECONDARY BATTERY, ELECTRICAL DEVICE, AND SECONDARY BATTERY PREPARATION METHOD**

(30) Priority: 14.10.2025 CN 202511467661
(71) Applicant: Ningde Amperex Technology Limited, Ningde, Fujian 352100 (CN)
(72) Inventor: LI, Sheng, Ningde, 352100 (CN)
(74) Representative: Dehns Germany Partnerschaft mbB

(57) **Abstract**

This application discloses a secondary battery (100), an electrical device (1000), and a secondary battery (100) preparation method. The secondary battery (100) includes a packaging pouch (10) and an electrode assembly (20). The electrode assembly (20) is disposed in the packaging pouch (10). The packaging pouch (10) includes an accommodation portion (11) and a sealing portion (12). The accommodation portion (11) is provided with an accommodation cavity (111) for accommodating the electrode assembly (20) and a groove (112) recessed toward the accommodation cavity (111). The sealing portion (12) is connected to the accommodation portion (11) and seals the accommodation cavity (111). The accommodation portion (11) includes a first sidewall (113) and a second sidewall (114). A groove wall of the groove (112) is connected to the first sidewall (113) and the second sidewall (114). The sealing portion (12) includes a first side seal edge (121) and a second side seal edge (122) that are connected to each other. The first side seal edge (121) is connected to the first sidewall (113) and bent toward the first sidewall (113). The second side seal edge (122) is connected to the second sidewall (114) and bent toward the second sidewall (114). A part of the first side seal edge (121) and a part of the second side seal edge (122) jointly form a bent portion (102) at a junction between the first side seal edge (121) and the second side seal edge (122). A part of the bent portion (102) is located in the groove (112). In this way, a clearance between the sealing portion (12) and the accommodation portion (11) is reduced, and an energy density of the secondary battery (100) is increased.

## Description

### TECHNICAL FIELD

This application relates to the technical field of energy storage, and in particular, to a secondary battery, an electrical device, and a secondary battery preparation method.

### BACKGROUND

In the prior art, a pouch cell includes a packaging pouch and an electrode assembly, and the electrode assembly is disposed in the packaging pouch. The packaging pouch includes an accommodation portion and a sealing portion. The accommodation portion is provided with an accommodation cavity for accommodating the electrode assembly, and the sealing portion is connected to the accommodation portion and seals the accommodation cavity. However, there is still room for improvement in the energy density of existing pouch cells.

### SUMMARY

For a pouch cell in the prior art, the applicant hereof finds that, when two adjacent sidewalls of an accommodation portion are connected to side seal edges respectively, the side seal edges connected to the two sidewalls interfere with each other at a junction during bending of the side seal edges. After the two side seal edges are bent, the mutually interfering parts cause a relatively large clearance between the sealing portion and the accommodation portion, thereby resulting in a decrease in energy density.

In view of the above situation, it is necessary to provide a secondary battery to increase the energy density.

A first aspect of this application provides a secondary battery. The secondary battery includes a packaging pouch and an electrode assembly. The electrode assembly is disposed in the packaging pouch. The packaging pouch includes an accommodation portion and a sealing portion. The accommodation portion is provided with an accommodation cavity for accommodating the electrode assembly and a groove recessed toward the accommodation cavity. The sealing portion is connected to the accommodation portion and seals the accommodation cavity. The accommodation portion includes a first sidewall and a second sidewall. A groove wall of the groove is connected to the first sidewall and the second sidewall. The sealing portion includes a first side seal edge and a second side seal edge that are connected to each other. The first side seal edge is connected to the first sidewall and bent toward the first sidewall. The second side seal edge is connected to the second sidewall and bent toward the second sidewall. A part of the first side seal edge and a part of the second side seal edge jointly form a bent portion at a junction between the first side seal edge and the second side seal edge. A part of the bent portion is located in the groove.

By providing a groove on the accommodation portion, connecting the groove wall of the groove to the first sidewall and the second sidewall, and disposing, in the groove, a part of the bent portion formed by the first side seal edge and the second side seal edge at the junction, this application reduces the clearance between the sealing portion and the accommodation portion after bending the first side seal edge toward the first sidewall and bending the second side seal edge toward the second sidewall, and increases the energy density of the secondary battery.

In one or more embodiments, the accommodation portion includes a third sidewall. The first sidewall, the second sidewall, and the third sidewall are adjacent to each other in sequence. The first sidewall and the second sidewall form an obtuse angle. The second sidewall and the third sidewall form an obtuse angle. In this circumstance, the secondary battery is more prone to mutual interference between the first side seal edge and the second side seal edge at the junction therebetween. In this case, disposing a part of the bent portion in the groove is favorable for increasing the energy density of the secondary battery.

In one or more embodiments, a projection of the groove wall of the groove along a first direction is in an arcuate shape, and the first direction is a thickness direction of the secondary battery. In this circumstance, a groove with a groove wall casting an arcuate projection along the first direction can be conveniently formed through a deep-drawing process, and the accommodation portion is less prone to be damaged in the deep-drawing process when the deep-drawing depth is relatively large.

In one or more embodiments, along the first direction, a thickness of the secondary battery is 2 mm to 10 mm. For a secondary battery with a thickness of 2 mm to 10 mm, forming, through a deep-drawing process, a groove with a groove wall casting an arcuate projection along the first direction, is conducive to reducing the probability of damage to the accommodation portion during the deep-drawing.

In one or more embodiments, the bent portion includes a first part and a second part that are connected to each other. A crease is provided at a junction between the first part and the second part. Along the first direction, a distance between the crease and the groove wall of the groove in a bisector direction of an angle between the first part and the second part gradually increases.

In one or more embodiments, among lengths of projections of the first part and the second part along the first direction, a larger one is L. As viewed along the first direction, a radius of the groove is r, and r ≥ L. By setting r ≥ L, this application reduces the probability that the bent portion abuts against the groove wall when accommodated in the groove, thereby reducing the probability that the first side seal edge expands in a direction facing away from the first sidewall and the probability that the second side seal edge expands in a direction facing away from the second sidewall, further reducing the clearance between the sealing portion and the accommodation portion, and further increasing the energy density of the secondary battery.

In one or more embodiments, as viewed along the first direction, an angle between the first sidewall and the second sidewall is θ. Among widths of the first side seal edge and the second side seal edge in a spread-flat state, a larger one is W, and W × cos(θ/2) ≤ L < W/tan(θ/2). By setting W × cos(θ/2) ≤ L, this application improves the sealing performance of the first side seal edge and the second side seal edge. By setting L < W/tan(θ/2), this application further increases the energy density of the secondary battery.

In one or more embodiments, L+1 mm ≤ r ≤ L + 5 mm. By setting L+1 mm ≤ r ≤ L + 5 mm, this application achieves a relatively suitable space in the groove for accommodating the bent portion. When the bent portion includes a sharp corner, this setting can reduce the risk that the sharp corner punctures the accommodation portion in the case of dropping of the secondary battery, and further increase the energy density of the secondary battery.

In one or more embodiments, the crease includes a first end and a second end. The first end is closer to the groove wall of the groove than the second end. The bent portion includes a sharp corner at the first end. The secondary battery includes a first adhesive member. The first adhesive member is bonded between the groove wall of the groove and the sharp corner. In this case, the first adhesive member can fix the bent portion to the groove, thereby improving the structural stability between the sealing portion and the accommodation portion. In addition, when the secondary battery is dropped, the first adhesive member can restrict the sharp corner from impacting the accommodation portion, thereby reducing the risk of the sharp corner puncturing the accommodation portion.

In one or more embodiments, the secondary battery includes a second adhesive member. The second adhesive member is disposed at edges of the first side seal edge and the second side seal edge, thereby improving the sealing performance of the first side seal edge and the second side seal edge.

In one or more embodiments, the first side seal edge and the second side seal edge are connected through a rounded corner transition. This configuration can reduce stress concentration at a junction between the first side seal edge and the second side seal edge, thereby reducing the probability of damage to the bent portion caused by sharp folding that occurs during formation of the bent portion, and improving the sealing performance of the secondary battery.

In one or more embodiments, along the first direction, a projection of the groove lies within a projection of the sealing portion, and the first direction is a thickness direction of the secondary battery. In this case, the sealing portion can also achieve sealing in a region corresponding to the groove along the first direction, thereby increasing a sealing area of the sealing portion and improving the sealing performance of the secondary battery.

In one or more embodiments, the electrode assembly includes an electrode plate. The electrode plate is provided with a notch. A part of the groove is accommodated in the notch. The notch of the electrode plate can be adapted to the groove of the accommodation portion, thereby further increasing the energy density of the secondary battery.

In one or more embodiments, the bent portion is configured to be foldable. The foldable bent portion can make full use of the space of the groove, and allow the groove to be relatively small, thereby further increasing the energy density of the secondary battery.

A second aspect of this application provides an electrical device. The electrical device includes the secondary battery disclosed in the first aspect of this application. The secondary battery according to the first aspect of this application exhibits a relatively high energy density, thereby improving the operating time of the electrical device.

A third aspect of this application provides a method for preparing a secondary battery. The secondary battery includes a packaging pouch and an electrode assembly. The packaging pouch includes an accommodation portion and a sealing portion. The accommodation portion is provided with an accommodation cavity for accommodating the electrode assembly. The sealing portion is connected to the accommodation portion and seals the accommodation cavity. The accommodation portion includes a first sidewall and second sidewall adjacent to each other. The sealing portion includes a first side seal edge and second side seal edge connected to each other. The first side seal edge is connected to the first sidewall. The second side seal edge is connected to the second sidewall. The preparation method includes: bending the first side seal edge toward the first sidewall and bending the second side seal edge toward the second sidewall, where a part of the first side seal edge and a part of the second side seal edge jointly form a bent portion at a junction between the first side seal edge and the second side seal edge; and disposing a part of the bent portion in the groove, where the groove is provided in the accommodation portion and recessed toward the accommodation cavity, and a groove wall of the groove is connected to the first sidewall and the second sidewall.

By providing a groove on the accommodation portion, connecting the groove wall of the groove to the first sidewall and the second sidewall, and disposing, in the groove, a part of the bent portion formed by the first side seal edge and the second side seal edge at the junction, this application reduces the clearance between the sealing portion and the accommodation portion after bending the first side seal edge toward the first sidewall and bending the second side seal edge toward the second sidewall, and increases the energy density of the secondary battery.

### BRIEF DESCRIPTION OF DRAWINGS

FIG. 1 is a schematic structural diagram of a secondary battery according to an embodiment of this application;
FIG. 2 is a schematic diagram of preparing a packaging pouch from a film structure according to an embodiment of this application;
FIG. 3 is a schematic cross-sectional view of a film structure according to an embodiment of this application;
FIG. 4 is a schematic diagram of a first side seal edge and a second side seal edge in an unfolded state according to an embodiment of this application;
FIG. 5 is an enlarged view of the vicinity of the groove shown in FIG. 4;
FIG. 6 is an enlarged view of the vicinity of the groove shown in FIG. 1;
FIG. 7 is a local cross-sectional view taken along a section line A-A shown in FIG. 6; and
FIG. 8 is a schematic diagram of an electrical device according to an embodiment of this application.

### List of reference signs:

100. secondary battery; 101. film structure; 1011. bonding layer; 1012. barrier layer; 1013. protection layer; 102. bent portion; 1021. first part; 1022. second part; 1023. crease; 1023a. first end; 1023b. second end; 1024. sharp corner; 103. first line segment; 104. second line segment; 105. third line segment; 10. packaging pouch; 11. accommodation portion; 111. accommodation cavity; 112. groove; 113. first sidewall; 114. second sidewall; 115. third sidewall; 116. top wall; 12. sealing portion; 121. first side seal edge; 122. second side seal edge; 123. top seal edge; 20. electrode assembly; 201. notch; 21. electrode plate; 211. positive electrode plate; 212. negative electrode plate; 22. separator; 23. electrode terminal; 1000. electrical device.

### DETAILED DESCRIPTION

The following describes the technical solutions in some embodiments of this application with reference to the drawings hereof. Evidently, the described embodiments are merely a part of but not all of the embodiments of this application.

It is noted that a component considered to be "connected to" another component may be directly connected to the other component or may be connected to the other component through an intermediate component. A component considered to be "disposed on" another component may be directly disposed on the other component or may be disposed on the other component through an intermediate component.

Unless otherwise expressly specified, the term "a plurality of" used herein means two or more.

The technical terms "first" and "second" are merely intended to distinguish between different items but not intended to indicate or imply relative importance or implicitly specify the number of the indicated technical features, specific order, or order of precedence.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated.

Understandably, as used herein, "orthographic projection" refers to an orthographic projection of a component or two components along a specified direction.

An embodiment of this application provides a secondary battery. The secondary battery includes a packaging pouch and an electrode assembly. The electrode assembly is disposed in the packaging pouch. The packaging pouch includes an accommodation portion and a sealing portion. The accommodation portion is provided with an accommodation cavity for accommodating the electrode assembly and a groove recessed toward the accommodation cavity. The sealing portion is connected to the accommodation portion and seals the accommodation cavity. The accommodation portion includes a first sidewall and a second sidewall. A groove wall of the groove is connected to the first sidewall and the second sidewall. The sealing portion includes a first side seal edge and a second side seal edge that are connected to each other. The first side seal edge is connected to the first sidewall and bent toward the first sidewall. The second side seal edge is connected to the second sidewall and bent toward the second sidewall. A part of the first side seal edge and a part of the second side seal edge jointly form a bent portion at a junction between the first side seal edge and the second side seal edge. A part of the bent portion is located in the groove.

In the secondary battery of this application, by providing a groove on the accommodation portion, connecting the groove wall of the groove to the first sidewall and the second sidewall, and disposing, in the groove, a part of the bent portion formed by the first side seal edge and the second side seal edge at the junction, this application reduces the clearance between the sealing portion and the accommodation portion after bending the first side seal edge toward the first sidewall and bending the second side seal edge toward the second sidewall, and increases the energy density of the secondary battery.

The following describes some embodiments of this application with reference to drawings. To the extent that no conflict occurs, the following embodiments and the features in the embodiments may be combined with each other.

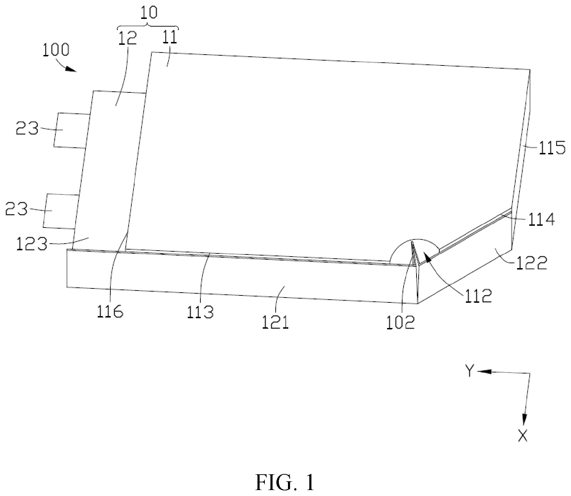

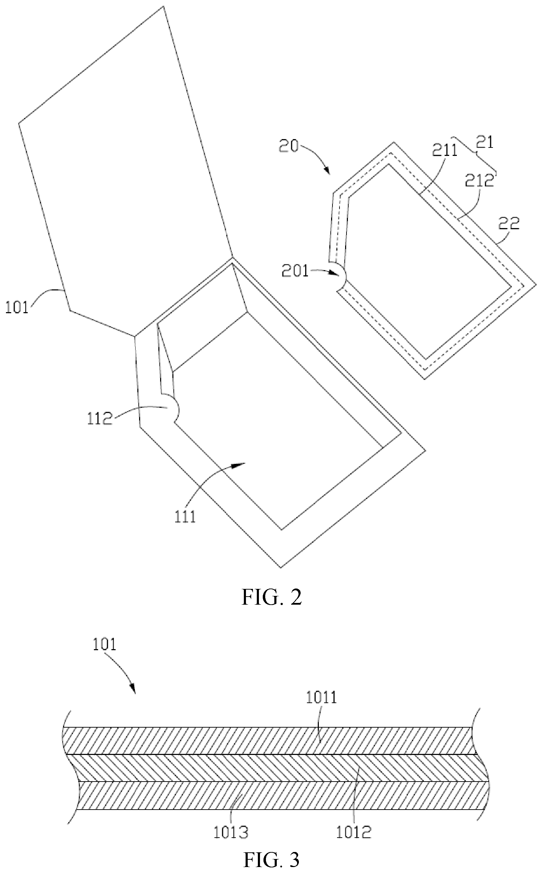

Referring to FIG. 1 and FIG. 2, an embodiment of this application provides a secondary battery 100, including a packaging pouch 10 and an electrode assembly 20. The electrode assembly 20 is disposed in the packaging pouch 10. In some embodiments, the packaging pouch 10 is filled with an electrolyte. The electrolyte includes an electrolyte salt. The electrolyte salt includes at least one of an organic lithium salt or an inorganic lithium salt. In some embodiments, the electrolyte salt includes, but is not limited to, at least one of lithium hexafluorophosphate (LiPF₆), lithium bis(trifluoromethanesulfonyl)imide LiN(CF₃SO₂)₂ (LiTFSI), lithium bis(fluorosulfonyl)imide Li(N(SO₂F)₂) (LiFSI), lithium hexafluorocesate (LiCsF₆), lithium perchlorate LiClO₄, or lithium trifluoromethanesulfonate (LiCF₃SO₃).

Referring to FIG. 2, the packaging pouch 10 may be made of a film structure 101. Referring to FIG. 3, the film structure 101 includes a bonding layer 1011, a barrier layer 1012, and a protection layer 1013. The bonding layer 1011 and the protection layer 1013 are disposed on opposite sides of the barrier layer 1012 along a thickness direction respectively. The bonding layer 1011 is capable of being melted and solidified. The barrier layer 1012 is capable of blocking moisture and electrolyte. The protection layer 1013 is configured to protect the barrier layer 1012.

In some embodiments, the bonding layer 1011 is made of a material including at least one electrolyte-resistant material, such as polypropylene, polyethylene, or poly(ethylene-co-acrylic acid). In some embodiments, the barrier layer 1012 is made of a material including at least one of aluminum or copper. In some embodiments, the protection layer 1013 is made of a material including at least one wear-resistant material, such as polyester or nylon. When the material of the barrier layer 1012 is aluminum, the film structure 101 is an aluminum laminated film. When the material of the barrier layer 1012 is copper, the film structure 101 is a copper laminated film.

Referring to FIG. 1 and FIG. 2, the packaging pouch 10 includes an accommodation portion 11. The accommodation portion 11 is configured to accommodate the electrode assembly 20. The accommodation portion 11 is provided with an accommodation cavity 111 for accommodating the electrode assembly 20. In some embodiments, the accommodation cavity 111 is formed from the film structure 101 through a deep-drawing process. During the deep-drawing, a deep-drawing direction is consistent with a stacking direction in which the bonding layer 1011, the barrier layer 1012, and the protection layer 1013 are stacked in sequence.

Referring to FIG. 1 and FIG. 2, the accommodation portion 11 is provided with a groove 112. As viewed along the first direction X, the groove 112 is recessed toward the accommodation cavity 111. In this application, the first direction X is a thickness direction of the secondary battery 100. In some embodiments, the groove 112 is also formed when the film structure 101 is deep-drawn to form the accommodation cavity 111. The accommodation portion 11 includes a first sidewall 113 and a second sidewall 114. A groove wall of the groove 112 is connected to the first sidewall 113 and the second sidewall 114.

In some embodiments, a projection of the groove wall of the groove 112 along the first direction X is in an arcuate shape. In this circumstance, the groove 112 with a groove wall casting an arcuate projection along the first direction X can be conveniently formed through a deep-drawing process, and the accommodation portion 11 is less prone to be damaged in the deep-drawing process when the deep-drawing depth is relatively large. Understandably, the projection of the groove wall of the groove 112 along the first direction X may be in a polyline shape or a combination of an arcuate shape and a plurality of line segments instead. The shape of the projection is not particularly limited herein.

In some embodiments, along the first direction X, a thickness of the secondary battery 100 is 2 mm to 10 mm. For example, the thickness of the secondary battery 100 is 2 mm, 3 mm, 4 mm, 5 mm, 7 mm, 10 mm, or a value falling within a range defined by any two thereof. For a secondary battery 100 with a thickness of 2 mm to 10 mm, forming, through a deep-drawing process, a groove 112 with a groove wall casting an arcuate projection along the first direction X, is conducive to reducing the probability of damage to the accommodation portion 11 during the deep-drawing.

Referring to FIG. 2, in some embodiments, the electrode assembly 20 includes electrode plates 21. The electrode plates 21 are plural, and the plurality of electrode plates 21 are divided by polarity into positive electrode plates 211 and negative electrode plates 212. The electrode assembly 20 includes separators 22. Each separator 22 separates a positive electrode plate 211 from a negative electrode plate 212. The positive electrode plates 211, the negative electrode plates 212, and the separators 22 may be stacked to form a stacked structure, or wound to form a wound structure, without being limited herein.

Referring to FIG. 1 and FIG. 2, electrode terminals 23 are omitted in FIG. 2. In some embodiments, the electrode plate 21 is connected to an electrode terminal 23. A part of the electrode terminal 23 is located in the accommodation portion 11, and another part protrudes from the packaging pouch 10. The electrode terminals 23 are divided by polarity into positive electrode terminals and negative electrode terminals. Each positive electrode terminal is connected to the positive electrode plate 211, and each negative electrode terminal is connected to the negative electrode plate 212. In some embodiments, the electrode terminal 23 includes a tab (not shown in the figure). The tab is connected to the electrode plate 21. A part of the tab is located in the accommodation portion 11, and another part protrudes from the packaging pouch 10. In some embodiments, the electrode terminal 23 includes a tab and an electrical connecting member (not shown in the figure). The tab is connected to the electrode plate 21 and the electrical connecting member. A part of the electrical connecting member is located in the accommodation portion 11, and another part protrudes from the packaging pouch 10.

Referring to FIG. 1 and FIG. 2, the packaging pouch 10 includes a sealing portion 12. The sealing portion 12 is connected to the accommodation portion 11 and seals the accommodation cavity 111. In some embodiments, after the film structure 101 is deep-drawn, an undrawn part of the film structure is folded, such that the undrawn part of the film structure 101 is stacked along the first direction X. The bonding layer 1011 of the undrawn part is melted and then solidified to form a sealing portion 12.

In some embodiments, a part of the electrode terminal 23 is located in the accommodation portion 11, and another part protrudes from the sealing portion 12. In some embodiments, a part of the electrode terminal 23 is interposed in the sealing portion 12, and an insulation member (not shown in the figure) is disposed between the electrode terminal 23 and the sealing portion 12. The material of the insulation member includes, but is not limited to, polypropylene, polyethylene, or poly(ethylene-co-acrylic acid), so as to facilitate melting and subsequent solidification together with the bonding layer 1011 of the film structure 101, thereby improving the sealing performance of the sealing portion 12 at a position from which the electrode terminal 23 protrudes. In some embodiments, the insulation member is insulation adhesive.

Referring to FIG. 1, the sealing portion 12 includes a first side seal edge 121 and a second side seal edge 122 that are connected to each other. The first side seal edge 121 is connected to the first sidewall 113, and the second side seal edge 122 is connected to the second sidewall 114. The widths of the first side seal edge 121 and the second side seal edge 122 may be the same or different, without being limited herein. In some embodiments, the width of the first side seal edge 121 is 2 mm to 6 mm, and the width of the second side seal edge 122 is 2 mm to 6 mm. For example, the width of the first side seal edge 121 is 2 mm, 3 mm, 4 mm, 5 mm, 6 mm, or a value falling within a range defined by any two thereof. The width of the second side seal edge 122 is 2 mm, 3 mm, 4 mm, 5 mm, 6 mm, or a value falling within a range defined by any two thereof.

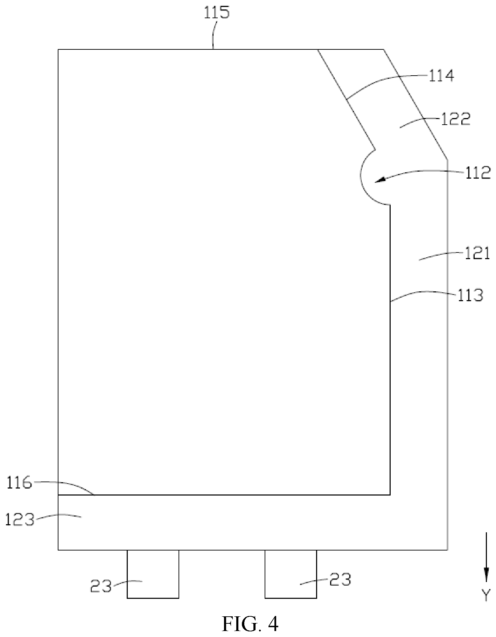

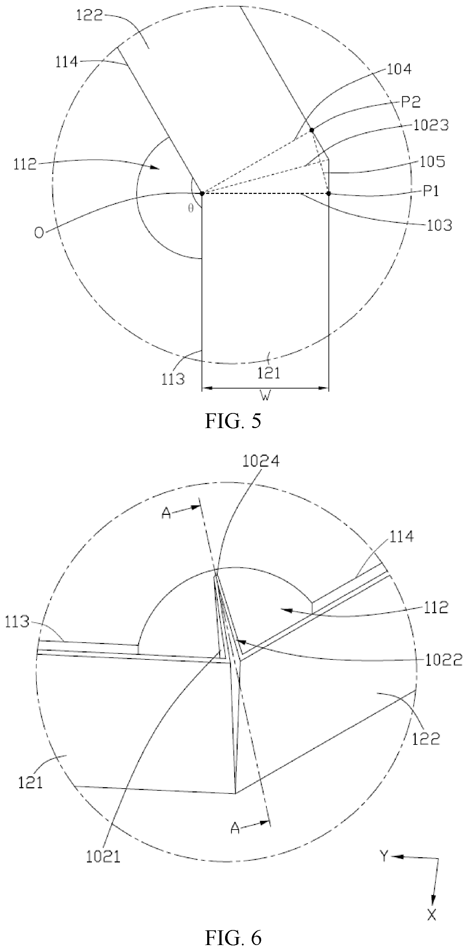

Referring to FIG. 1, the first side seal edge 121 is bent toward the first sidewall 113, and the second side seal edge 122 is bent toward the second sidewall 114. A part of the first side seal edge 121 and a part of the second side seal edge 122 jointly form a bent portion 102 at a junction between the first side seal edge 121 and the second side seal edge 122. A part of the bent portion 102 is located in the groove 112. Referring to FIG. 4 and FIG. 5, the junction between the first side seal edge 121 and the second side seal edge 122 may be determined as follows: the first side seal edge 121 and the second side seal edge 122 are spread flat. As viewed along the first direction X, extension lines of the first sidewall 113 and the second sidewall 114 intersect at a point O. A first line segment 103 perpendicular to the first sidewall 113 is drawn from point O, and a second line segment 104 perpendicular to the second sidewall 114 is drawn from point O. A part of the first side seal edge 121 and a part of the second side seal edge 122, which are located within an angle formed by the first line segment 103 and the second line segment 104, constitute the junction between the first side seal edge 121 and the second side seal edge 122. The length of the first line segment 103 may be regarded as the width of the first side seal edge 121, and the length of the second line segment 104 may be regarded as the width of the second side seal edge 122.

By providing a groove 112 on the accommodation portion 11, connecting the groove wall of the groove to the first sidewall 113 and the second sidewall 114, and disposing, in the groove 112, a part of the bent portion 102 formed by the first side seal edge 121 and the second side seal edge 122 at the junction, this application reduces the clearance between the sealing portion 12 and the accommodation portion 11 after bending the first side seal edge 121 toward the first sidewall 113 and bending the second side seal edge 122 toward the second sidewall 114, and increases the energy density of the secondary battery 100.

Referring to FIG. 1, in some embodiments, the accommodation portion 11 includes a third sidewall 115. The first sidewall 113, the second sidewall 114, and the third sidewall 115 are adjacent to each other in sequence. The first sidewall 113 and the second sidewall 114 form an obtuse angle. The second sidewall 114 and the third sidewall 115 form an obtuse angle. In this circumstance, the secondary battery 100 is more prone to mutual interference between the first side seal edge 121 and the second side seal edge 122 at the junction therebetween. In this case, disposing a part of the bent portion 102 in the groove 112 is favorable for increasing the energy density of the secondary battery 100.

Referring to FIG. 1, in some embodiments, the accommodation portion 11 includes a top wall 116. The top wall 116 and the third sidewall 115 are disposed opposite to each other along a second direction Y. The third sidewall 115 is a bottom wall of the accommodation portion 11. The second direction Y is perpendicular to the first direction X.

Referring to FIG. 1, in some embodiments, the sealing portion 12 includes a top seal edge 123. The top seal edge 123 is connected to the top wall 116. The top seal edge 123 may be bent toward the top wall 116 or may not be bent, without being limited herein. In some embodiments, the electrode terminal 23 protrudes from the top seal edge 123.

Referring to FIG. 2, in some embodiments, the electrode plate 21 is provided with a notch 201. A part of the groove 112 is accommodated in the notch 201. The notch 201 of the electrode plate 21 can be adapted to the groove 112 of the accommodation portion 11, thereby further increasing the energy density of the secondary battery 100. In some embodiments, the positive electrode plate 211, the negative electrode plate 212, and the separator 22 are each provided with a notch 201.

In some embodiments, the first side seal edge 121 and the second side seal edge 122 are connected through a rounded corner transition. This configuration can reduce stress concentration at a junction between the first side seal edge 121 and the second side seal edge 122, thereby reducing the probability of damage to the bent portion 102 caused by sharp folding that occurs during formation of the bent portion 102, and improving the sealing performance of the secondary battery 100.

In some embodiments, along the first direction X, a projection of the groove 112 lies within a projection of the sealing portion 12. Understandably, along the first direction X, the groove 112 does not run through the sealing portion 12. In this case, the sealing portion 12 can also achieve sealing in a region corresponding to the groove 112 along the first direction X, thereby increasing a sealing area of the sealing portion 12 and improving the sealing performance of the secondary battery 100.

In some embodiments, the bent portion 102 is configured to be foldable. The foldable bent portion 102 can make full use of the space of the groove 112, and allow the groove 112 to be relatively small, thereby further increasing the energy density of the secondary battery 100. In some embodiments, a part of the bent portion 102 is folded and disposed in the groove 112.

Referring to FIG. 5 and FIG. 6, in some embodiments, the bent portion 102 includes a first part 1021 and a second part 1022 that are connected to each other. A crease 1023 is provided at a junction between the first part 1021 and the second part 1022. Referring to FIG. 5, the junction between the first part 1021 and the second part 1022 may be determined as follows: a bisector of an angle formed by the first line segment 103 and the second line segment 104 is drawn to serve as the crease 1023 corresponding to the junction between the first part 1021 and the second part 1022. In some embodiments, when the first side seal edge 121 and the second side seal edge 122 are in a spread-flat state, the crease 1023 may be visually observed.

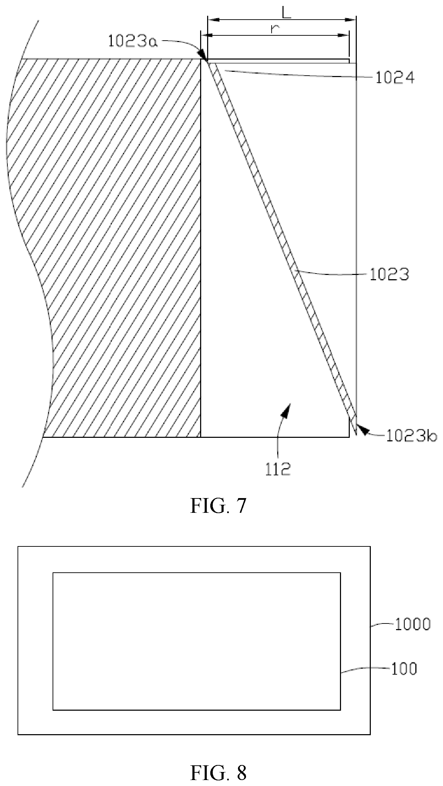

Referring to FIG. 7, FIG. 7 shows a partial cross-sectional view sectioned along the crease 1023 at a position of the groove 112. In some embodiments, along the first direction X, a distance between the crease 1023 and the groove wall of the groove 112 in a bisector direction of the angle between the first part 1021 and the second part 1022 gradually increases.

Referring to FIG. 7, in some embodiments, the crease 1023 includes a first end 1023a and a second end 1023b. The first end 1023a is closer to the groove wall of the groove 112 than the second end 1023b. The bent portion 102 includes a sharp corner 1024 at the first end 1023a.

Referring to FIG. 7, in some embodiments, among lengths of projections of the first part 1021 and the second part 1022 along the first direction X, a larger one is L. As viewed along the first direction X, a radius of the groove 112 is r, and r ≥ L. By setting r ≥ L, this application reduces the probability that the bent portion 102 abuts against the groove wall of the groove 112 when accommodated in the groove 112, thereby reducing the probability that the first side seal edge 121 expands in a direction facing away from the first sidewall 113 and the probability that the second side seal edge 122 expands in a direction facing away from the second sidewall 114, further reducing the clearance between the sealing portion 12 and the accommodation portion 11, and further increasing the energy density of the secondary battery 100. Understandably, the projections of the first part 1021 and the second part 1022 along the first direction X are determined based on the bent portion 102 being in an unfolded state.

In some embodiments, r < L. By folding the bent portion 102, this application causes a larger part of the bent portion 102 to be located in the groove 112.

In some embodiments, 1 mm ≤ L ≤ 6 mm. For example, L is 1 mm, 2 mm, 3 mm, 4 mm, 5 mm, 6 mm, or a value falling within a range formed by any two thereof.

Referring to FIG. 5, in some embodiments, as viewed along the first direction X, an angle between the first sidewall 113 and the second sidewall 114 is θ. In other words, an angle formed by extension lines of the first sidewall 113 and the second sidewall 114 on one side of the accommodation portion 11 is θ. As viewed along the first direction X, among the widths of the first side seal edge 121 and the second side seal edge 122 in a spread-flat state, the larger one is W. In other words, among the lengths of the first line segment 103 and the second line segment 104, the larger one is W. W × cos(θ/2) ≤ L < W/tan (θ/2). By setting W × cos(θ/2) ≤ L, this application improves the sealing performance of the first side seal edge 121 and the second side seal edge 122. By setting L < W/tan(θ/2), this application further increases the energy density of the secondary battery 100.

Referring to FIG. 5, in some embodiments, the first side seal edge 121 and the second side seal edge 122 are spread flat. As viewed along the first direction X, extension lines of the first sidewall 113 and the second sidewall 114 intersect at a point O. A first line segment 103 perpendicular to the first sidewall 113 is drawn from point O, and a second line segment 104 perpendicular to the second sidewall 114 is drawn from point O. The first line segment 103 intersects an edge of the first side seal edge 121 at a point P1. The second line segment 104 intersects an edge of the second side seal edge 122 at a point P2. A third line segment 105 is obtained by connecting the point P1 and the point P2. Parts of the first side seal edge 121 and the second side seal edge 122 on one side, far away from the point O, of the third line segment 105 are cut away to meet the condition: W × cos(θ/2) ≤ L < W/tan(θ/2).

In some embodiments, the angle satisfies: 90° ≤ θ ≤ 175°. For example, θ is 90°, 95°, 100°, 110°, 120°, 135°, 150°, 175°, or a value falling within a range defined by any two thereof.

In some embodiments, L + 1 mm ≤ r ≤ L + 5 mm. As an example, when L is 3 mm, 4 mm ≤ r ≤ 8 mm. By setting L + 1 mm ≤ r ≤ L + 5 mm, this application achieves a relatively suitable space in the groove 112 for accommodating the bent portion 102. When the bent portion 102 includes a sharp corner 1024, this setting can reduce the risk that the sharp corner 1024 punctures the accommodation portion 11 in the case of dropping of the secondary battery 100, thereby further increasing the energy density of the secondary battery 100.

In some embodiments, the secondary battery 100 includes a first adhesive member (not shown in the figure). The first adhesive member is adhesively disposed between the groove wall of the groove 112 and the sharp corner 1024. The first adhesive member includes, but is not limited to, a hot-melt adhesive and a double-sided adhesive, and is not limited herein. In this case, the first adhesive member can fix the bent portion 102 to the groove 112, thereby improving the structural stability between the sealing portion 12 and the accommodation portion 11. In addition, when the secondary battery 100 is dropped, the first adhesive member can restrict the sharp corner 1024 from impacting the accommodation portion 11, thereby reducing the risk of the sharp corner 1024 puncturing the accommodation portion 11.

Understandably, the first adhesive member may be adhesively disposed between the first sidewall 113 and the first side seal edge 121, and/or the first adhesive member may be adhesively disposed between the second sidewall 114 and the second side seal edge 122. This arrangement improves the structural stability between the sealing portion 12 and the accommodation portion 11.

In some embodiments, the secondary battery 100 includes a second adhesive member (not shown in the figure). The second adhesive member is disposed at edges of the first side seal edge 121 and the second side seal edge 122. The second adhesive member includes, but is not limited to, an ultraviolet-curable adhesive and an epoxy resin adhesive, without being limited herein, thereby improving the sealing performance of the first side seal edge 121 and the second side seal edge 122. In some embodiments, when the film structure 101 is cut out and a packaging pouch 10 is prepared from the film structure 101, it is possible that the barrier layer 1012 of the film structure 101 is exposed. By arranging the second adhesive member to cover the barrier layer 1012, this application reduces the possibility of corrosion of the barrier layer 1012.

Understandably, the second adhesive member may be disposed at an edge of a part of the top seal edge 123 other than a part from which the electrode terminal 23 protrudes.

Referring to FIG. 8, an embodiment of this application further provides an electrical device 1000. The electrical device 1000 includes the secondary battery 100 mentioned in any one of the above embodiments. The energy density of the secondary battery 100 of this application is relatively high, thereby improving the operating time of the electrical device 1000. The electrical device 1000 includes, but is not limited to, electronic devices such as an e-book player, a mobile phone, a fax machine, a photocopier, a printer, a headphone, a video recorder, an LCD TV, an audio recorder, a radio, a camera, a tablet, and a laptop.

An embodiment of this application further provides a method for preparing a secondary battery 100. The secondary battery 100 includes a packaging pouch 10 and an electrode assembly 20. The packaging pouch 10 includes an accommodation portion 11 and a sealing portion 12. The accommodation portion 11 is provided with an accommodation cavity 111 for accommodating the electrode assembly 20. The sealing portion 12 is connected to the accommodation portion 11 and seals the accommodation cavity 111. The accommodation portion 11 includes a first sidewall 113 and second sidewall 114 adjacent to each other. The sealing portion 12 includes a first side seal edge 121 and second side seal edge 122 connected to each other. The first side seal edge 121 is connected to the first sidewall 113. The second side seal edge 122 is connected to the second sidewall 114. The preparation method includes the following steps:
Step I: Bending the first side seal edge 121 toward the first sidewall 113 and bending the second side seal edge 122 toward the second sidewall 114, where a part of the first side seal edge 121 and a part of the second side seal edge 122 jointly form a bent portion 102 at a junction between the first side seal edge 121 and the second side seal edge 122.
Step II: Disposing a part of the bent portion 102 in the groove 112, where the groove 112 is provided in the accommodation portion 11 and recessed toward the accommodation cavity 111, and a groove wall of the groove 112 is connected to the first sidewall 113 and the second sidewall 114.

By disposing the groove 112 on the accommodation portion 11, connecting the groove wall of the groove 112 to the first sidewall 113 and the second sidewall 114, and disposing, in the groove 112, a part of the bent portion 102 formed by the first side seal edge 121 and the second side seal edge 122 at the junction, this application reduces the clearance between the sealing portion 12 and the accommodation portion 11 after bending the first side seal edge 121 toward the first sidewall 113 and bending the second side seal edge 122 toward the second sidewall 114, and increases the energy density of the secondary battery 100.

In some embodiments, before step I, the packaging pouch 10 is prepared from the film structure 101 through a deep-drawing process. The groove 112 is also formed when the accommodation cavity 111 is formed through the deep-drawing process.

In some embodiments, before step I, the electrode assembly 20 is accommodated in the accommodation cavity 111, and an electrode terminal 23 connected to the electrode plate 21 of the electrode assembly 20 protrudes from the packaging pouch 10.

In some embodiments, before step I, an undrawn part of the film structure 101 is heat-sealed to form a sealing portion 12. In some embodiments, the heat-sealing is performed using a heat-sealing machine.

In some embodiments, before step I, a part of an edge of the sealing portion 12 is cut away. In some embodiments, a part of the edge of the sealing portion 12 is cut away using a trimming knife.

In some embodiments, before step I, the second adhesive member is disposed at edges of the first side seal edge 121 and the second side seal edge 122. In some embodiments, between step I and step II, the second adhesive member is disposed at edges of the first side seal edge 121 and the second side seal edge 122.

In some embodiments, in step I, the first adhesive member is adhesively disposed between the first sidewall 113 and the first side seal edge 121. In some embodiments, in step I, the first adhesive member is adhesively disposed between the second sidewall 114 and the second side seal edge 122.

In some embodiments, between step I and step II, the bent portion 102 is folded.

In some embodiments, in step II, the first adhesive member is adhesively disposed between the groove wall of the groove 112 and the sharp corner 1024 of the bent portion 102.

In some embodiments, after step II, the secondary battery 100 is subjected to formation.

To verify the effects of the technical solutions provided in this application on a secondary battery 100, the applicant hereof performs the following experiment.

A process for preparing a secondary battery 100 in Embodiment 1 includes the following steps:
Preparation of a positive electrode plate 211: Dissolving lithium cobalt oxide as a positive active material, conductive carbon black as a conductive agent, and polyvinylidene fluoride (PVDF) as a binder at a mass ratio of 97.5:1:1.5 in an N-methylpyrrolidone (NMP) solution to form a positive electrode slurry. Using aluminum foil as a positive current collector, applying the positive electrode slurry onto the positive current collector, and performing steps of drying, cold pressing, cutting, and slitting to obtain a positive electrode plate 211. The positive electrode plate 211 is 70 mm in length and 60 mm in width. After one corner is cut away, one of the widthwise edges is 30 mm, and an angle between the widthwise edge and the cut edge is 120°. A notch is provided on the cut edge.

Preparation of a negative electrode plate 212: Mixing artificial graphite as a negative active material, sodium carboxymethyl cellulose (CMC) as a thickener, and styrene-butadiene rubber (SBR) as a binder at a mass ratio of 96:1.5:2.5. Adding deionized water, and stirring well with a vacuum mixer to obtain a negative electrode slurry. Using copper foil as a negative current collector. Coating the negative current collector with the negative electrode slurry evenly, drying the coated current collector, and performing cold-pressing, cutting, and slitting to obtain a negative electrode plate 212. The negative electrode plate 212 is 71 mm in length and 60.5 mm in width. After one corner is cut away, one of the widthwise edges is 30 mm, and an angle between the widthwise edge and the cut edge is 120°. A notch is provided on the cut edge.

Preparation of a separator 22: Using polyethylene (PE) as a substrate layer of the separator 22. Coating both sides of the substrate layer of the separator 22 with an aluminum oxide ceramic layer. Finally, applying polyvinylidene fluoride (PVDF) as a binder onto both sides coated with the ceramic layer, and performing oven-drying. Providing a notch on the separator 22 at a position at which corresponding notches are provided on the positive electrode plate 211 and the negative electrode plate 212.

Preparation of an electrolyte: Mixing ethylene carbonate (EC), ethyl methyl carbonate (EMC), and diethyl carbonate (DEC) in a dry argon atmosphere glovebox at a mass ratio of 3:5:2. Adding a lithium salt LiPF₆, and stirring well to obtain an electrolyte in which the mass percentage of LiPF₆ is 12.5%.

Preparation of a secondary battery 100: With reference to the steps described herein earlier above, deep-drawing a film structure 101 to prepare an accommodation portion 11 provided with an accommodation cavity 111 and a groove 112, where the accommodation portion 11 includes a first sidewall 113 and a second sidewall 114. Placing an electrode assembly 20 into the accommodation cavity 111, and leaving an electrode terminal 23 to protrude from a packaging pouch 10. Heat-sealing the packaging pouch 10 to form a sealing portion 12 that includes a first side seal edge 121 and a second side seal edge 122. Bending the first side seal edge 121 toward the first sidewall 113, and bending the second side seal edge 122 toward the second sidewall 114 to form a bent portion 102, such that a part of the bent portion 102 is located in the groove 112. The packaging pouch 10 is 3.5 mm in thickness, an angle θ between the first sidewall 113 and the second sidewall 114 is 120°. The width of the first side seal edge 121 and the width of the second side seal edge 122, denoted as W, are equal and are 2 mm. The groove wall of the groove 112 is arcuate with a radius of 3 mm, denoted as r. The bent portion 102 is partially cut, with L being 1 mm.

The preparation process of the secondary battery 100 in Comparative Embodiment 1 is substantially the same as that in Embodiment 1, except that the packaging pouch 10 in Comparative Embodiment 1 is not provided with the groove 112 for accommodating the bent portion 102, and accordingly, there is no value for r.

The preparation processes of the secondary batteries 100 in Embodiments 2 to 4 are substantially the same as that in Embodiment 1, except that the values of L in Embodiments 2 to 4 are different from that in Embodiment 1.

The preparation processes of the secondary batteries 100 in Embodiments 5 to 8 are substantially the same as that in Embodiment 1, except that the values of r in Embodiments 5 to 8 are different from that in Embodiment 1.

After the secondary batteries 100 in the comparative embodiment and the embodiments are prepared, the energy density of all the secondary batteries 100 in each group is measured, and all the secondary batteries 100 in each group are subjected to a drop test to observe whether the secondary batteries 100 pass the drop test. After completion of the tests, the experimental results are recorded in Table 1.

A specific process of measuring the energy density is as follows:

The energy density is calculated as: energy density = energy value/cell volume. The energy value is a product of the cell capacity and voltage, and the cell volume is a product of the length, width, and thickness of a battery cell. The cell thickness is measured as follows using a parallel plate gauge (PPG): placing a battery cell between two plates, and applying a load of typically 650 g ± 50 g, and then measuring a distance between the two plates to obtain the cell thickness.

### Drop Test

(1) Dropping a secondary battery 100 freely from a height of 1 m onto a concrete floor in six-face and eight-corner orientations. Inspecting the appearance of the secondary battery 100 after each drop. Stopping the drop test immediately if the secondary battery 100 leaks or catches fire.

(2) Taking 100 secondary batteries 100 from each comparative embodiment or embodiment for testing. Disassembling the secondary batteries 100 after all the 100 secondary batteries 100 in each group have completed the drop test. Denoting the number of secondary batteries 100 that have neither leaked nor caught fire as N, and calculating the drop-test pass rate of the secondary batteries 100 in the group as N/100.

**Table 1**

| Experimental group | Packaging pouch 10 provided with a groove 112 for accommodating bent portion 102? | L (mm) | r (mm) | Energy density (Wh/L) | Drop test pass rate (N/100) |
|---|---|---|---|---|---|
| Comparative Embodiment 1 | No | 1 | / | 748 | 60 |
| Embodiment 1 | Yes | 1 | 3 | 780 | 80 |
| Embodiment 2 | Yes | 1.05 | 3 | 780 | 80 |
| Embodiment 3 | Yes | 1.1 | 3 | 780 | 85 |
| Embodiment 4 | Yes | 1.15 | 3 | 780 | 85 |
| Embodiment 5 | Yes | 1 | 2 | 788 | 75 |
| Embodiment 6 | Yes | 1 | 4 | 774 | 90 |
| Embodiment 7 | Yes | 1 | 5 | 765 | 90 |
| Embodiment 8 | Yes | 1 | 6 | 760 | 95 |

| | | | | | |
|---|---|---|---|---|---|
| Note: "/" in Table 1 means absence of the data. | | | | | |

As can be seen from Embodiment 1 and Comparative Embodiment 1, the energy density of the secondary battery 100 in Embodiment 1 is higher than that of the secondary battery 100 in Comparative Embodiment 1. In other words, this application improves the energy density of the secondary battery 100 by providing the packaging pouch 10 with a groove 112 for accommodating the bent portion 102.

As can be seen from Embodiments 1 to 4, when L gradually increases, the drop test pass rate of the secondary batteries 100 gradually increases. Although the energy densities of the secondary battery 100 in Embodiments 1 to 4 are comparable, if r decreases gradually with the gradual decrease of L and maintains the same decrement as L, because the decrease in r can reduce the space occupied by the groove 112, the energy density of the secondary battery 100 is increased, where, W × cos(θ/2) = 2 mm × cos60° = 1 mm, and W/tan(θ/2) = 2 mm/tan60° ≈ 1.155 mm. In other words, by setting W × cos(θ/2) ≤ L < W/tan(θ/2), this application improves the sealing performance of the first side seal edge 121 and the second side seal edge 122, thereby improving the drop test pass rate of the secondary battery 100, reducing the space occupied by the groove 112, and in turn, increasing the energy density of the secondary battery 100.

As can be seen from Comparative Embodiment 1, Embodiment 1, and Embodiments 5 to 8, both the energy density and the drop test pass rates of the secondary batteries 100 in Embodiment 1 and Embodiments 5 to 8 are higher than those of the secondary batteries 100 in Comparative Embodiment 1, where, L + 1 mm = 2 mm, L + 5 mm = 6 mm. In other words, by setting L + 1 mm ≤ r ≤ L + 5 mm, this application achieves a relatively suitable space in the groove 112 for accommodating the bent portion 102, thereby increasing the energy density of the secondary battery 100. Furthermore, when the bent portion 102 includes a sharp corner 1024, this setting can reduce the risk that the sharp corner 1024 punctures the accommodation portion 11 in the case of dropping of the secondary battery 100, thereby increasing the drop test pass rate of the secondary battery 100.

In addition, a person of ordinary skill in the art understands that the foregoing embodiments are merely intended to illustrate this application, but not to limit this application. Any and all appropriate modifications and changes made to the embodiments without departing from the essence of this application still fall within the protection scope of this application.

## Claims

1. A secondary battery (100), comprising a packaging pouch (10) and an electrode assembly (20), wherein the electrode assembly (20) is disposed in the packaging pouch (10), **characterized in that**
the packaging pouch (10) comprises an accommodation portion (11) and a sealing portion (12), the accommodation portion (11) is provided with an accommodation cavity (111) for accommodating the electrode assembly (20) and a groove (112) recessed toward the accommodation cavity (111), and the sealing portion (12) is connected to the accommodation portion (11) and seals the accommodation cavity (111); the accommodation portion (11) comprises a first sidewall (113) and a second sidewall (114), and a groove wall of the groove (112) is connected to the first sidewall (113) and the second sidewall (114); the sealing portion (12) comprises a first side seal edge (121) and a second side seal edge (122) that are connected to each other, the first side seal edge (121) is connected to the first sidewall (113) and bent toward the first sidewall (113), and the second side seal edge (122) is connected to the second sidewall (114) and bent toward the second sidewall (114); and
a part of the first side seal edge (121) and a part of the second side seal edge (122) jointly form a bent portion (102) at a junction between the first side seal edge (121) and the second side seal edge (122), and a part of the bent portion (102) is located in the groove (112).

2. The secondary battery (100) according to claim 1, wherein the accommodation portion (11) comprises a third sidewall (115); the first sidewall (113), the second sidewall (114), and the third sidewall (115) are adjacent to each other in sequence; the first sidewall (113) and the second sidewall (114) form an obtuse angle; and the second sidewall (114) and the third sidewall (115) form an obtuse angle.

3. The secondary battery (100) according to claim 1, wherein a projection of the groove wall of the groove (112) along a first direction is in an arcuate shape, and the first direction is a thickness direction of the secondary battery (100).

4. The secondary battery (100) according to claim 3, wherein, along the first direction, a thickness of the secondary battery (100) is 2 mm to 10 mm.

5. The secondary battery (100) according to claim 4, wherein the bent portion (102) comprises a first part (1021) and a second part (1022) that are connected to each other; a crease (1023) is provided at a junction between the first part (1021) and the second part (1022); along the first direction, a distance between the crease (1023) and the groove wall of the groove (112) in a bisector direction of an angle between the first part (1021) and the second part (1022) gradually increases.

6. The secondary battery (100) according to claim 5, wherein among lengths of projections of the first part (1021) and the second part (1022) along the first direction, a larger one is L, and, as viewed along the first direction, a radius of the groove (112) is r, and r ≥ L.

7. The secondary battery (100) according to claim 6, wherein as viewed along the first direction, an angle between the first sidewall (113) and the second sidewall (114) is θ, and, among widths of the first side seal edge (121) and the second side seal edge (122) in a spread-flat state, a larger one is W, and W × cos(θ/2) ≤ L < W/tan(θ/2).

8. The secondary battery (100) according to claim 6 or 7, wherein L + 1 mm ≤ r ≤ L + 5 mm.

9. The secondary battery (100) according to claim 5, wherein the crease (1023) comprises a first end (1023a) and a second end (1023b), the first end (1023a) is closer to the groove wall of the groove (112) than the second end (1023b), the bent portion (102) comprises a sharp corner (1024) at the first end (1023a), the secondary battery (100) comprises a first adhesive member, the first adhesive member is bonded between the groove wall of the groove (112) and the sharp corner (1024).

10. The secondary battery (100) according to claim 1, wherein the secondary battery (100) comprises a second adhesive member, and the second adhesive member is disposed at edges of the first side seal edge (121) and the second side seal edge (122).

11. The secondary battery (100) according to claim 1, wherein the first side seal edge (121) and the second side seal edge (122) are connected through a rounded corner transition.

12. The secondary battery (100) according to claim 1, wherein along the first direction, a projection of the groove (112) lies within a projection of the sealing portion (12), and the first direction is a thickness direction of the secondary battery (100).

13. The secondary battery (100) according to claim 1, wherein the electrode assembly (20) comprises an electrode plate (21), the electrode plate (21) is provided with a notch (201), and a part of the groove (112) is accommodated in the notch (201);or
the bent portion (102) is configured to be foldable.

14. An electrical device (1000), wherein the electrical device (1000) comprises the secondary battery (100) according to any one of claims 1 to 13.

15. A method for preparing a secondary battery (100), wherein the secondary battery (100) comprises a packaging pouch (10) and an electrode assembly (20), the packaging pouch (10) comprises an accommodation portion (11) and a sealing portion (12), the accommodation portion (11) is provided with an accommodation cavity (111) for accommodating the electrode assembly (20), the sealing portion (12) is connected to the accommodation portion (11) and seals the accommodation cavity (111), the accommodation portion (11) comprises a first sidewall (113) and second sidewall (114) adjacent to each other, the sealing portion (12) comprises a first side seal edge (121) and second side seal edge (122) connected to each other, the first side seal edge (121) is connected to the first sidewall (113), and the second side seal edge (122) is connected to the second sidewall (114), wherein, the preparation method comprises:
bending the first side seal edge (121) toward the first sidewall (113) and bending the second side seal edge (122) toward the second sidewall (114), wherein a part of the first side seal edge (121) and a part of the second side seal edge (122) jointly form a bent portion (102) at a junction between the first side seal edge (121) and the second side seal edge (122); and
disposing a part of the bent portion (102) in the groove (112), wherein the groove (112) is provided in the accommodation portion (11) and recessed toward the accommodation cavity (111), and a groove wall of the groove (112) is connected to the first sidewall (113) and the second sidewall (114).
